# EUROPÄISCHE PATENTANMELDUNG

(11) **EP 1 691 135 A1**
(43) Veröffentlichungstag der Anmeldung: **16.08.2006**
(21) Anmeldenummer: 06000992.5
(22) Anmeldetag: 18.01.2006
(51) Int. Cl.: F24C 15/02, A47J 27/08, A47J 27/16

(54) **Gerät zum Dampfgaren von Nahrungsmitteln**

(30) Priorität: 20.01.2005 DE 102005002833
(71) Anmelder: Salvis AG, 4663 Aarburg (CH)
(72) Erfinder: Schwizer, Anton, 6264 Pfaffnau (CH)
(74) Vertreter: Brommer, Hans Joachim

(57) **Zusammenfassung**

Die Erfindung betrifft ein Gerät zum Dampfgaren von Nahrungsmitteln in einem etwa zylindrischen Garraum (4), der zwecks Eingabe und Entnahme des Nahrungsmittels zu öffnen und zu verschließen ist. Wesentlich dabei ist, dass das Gerät eine zylindrische Garraumwandung (7) aufweist, die in ihrer Gesamtheit vertikal verfahrbar ist.

## Beschreibung

Die Erfindung betrifft ein Gerät zum Dampfgaren von Nahrungsmitteln in einem etwa zylindrischen Garraum, der zwecks Eingabe und Entnahme des Nahrungsmittels zu öffnen und zu verschließen ist.

Derartige Dampfgargeräte - auch Steamer genannt - sind in zahlreichen Ausführungsformen bekannt. Dabei wird im Allgemeinen in einer reinen Dampfumgebung unter Überdruck von 0,5 bar bis 1 bar gegart. Ihr Vorteil liegt im Wesentlichen in kurzen und schonenden Garzeiten. Außerdem behält das Kochgut seine schöne Farbe, da keine oxidierende Luft im Garraum vorhanden ist.

Im Allgemeinen wird dabei mit einem liegend angeordneten zylindrischen Druckbehälter gearbeitet, der vorne durch eine Tür druckfest verschließbar ist. Außerdem ist es durch die DE 27 31 137 bekannt, die zu garenden Nahrungsmittel auf einem Schlitten zu deponieren, der horizontal durch die zylindrische Druckkammer hindurchfahrbar ist. Der Schlitten trägt drei entsprechend der Länge der Druckkammer voneinander distanzierte Stirnplatten, die mit der linken und rechten Öffnung der Druckkammer korrespondieren und dort in dichtende Anlage zu bringen sind. Dadurch führt das Einfahren einer Charge zu garender Nahrungsmittel in die Druckkammer zum gleichzeitigen Hinausfahren der bereits gegarten Produkte. Zusätzliche Türen für das Öffnen und Schließen der Druckkammer erübrigen sich dabei. Allerdings benötigt dieses Gerät die doppelte Baulänge.

Daher werden heute ganz überwiegend Dampfgargeräte gebaut, die nur an ihrer Vorderseite eine Türe aufweisen, um die Nahrungsmittel, die im allgemeinen in mehreren Schalen übereinanderliegen, in die Druckkammer hineinzulegen bzw. zu entnehmen, vergleiche DE 43 15 814, DE 37 03 539, 197 33 314 und DE 102 06 736.

Daneben sind auch sogenannte Kombi-Steamer bekannt. Sie arbeiten im drucklosen Bereich, benötigen daher längere Garzeiten und das Kochgut wird weniger geschont. Dabei kann in einer Heißluftumgebung, in die Dampf eingespritzt wird, gegart werden. Es ist aber auch ein Backen oder Braten der Nahrungsmittel möglich. Auch bei diesen Geräten erfolgt die Beschickung durch eine Fronttüre.

Durch die DE 196 51 225 ist ein Ofen zur Wärmebehandlung von Lebensmitteln bekannt geworden, bei dem die Ofenkammer mittels einer Tür verschließbar ist, die einen verschiebbaren Flügel aufweist. Dieser Flügel kann seitlich oder oben wie auch unten im Gehäuse versenkt werden.

Ähnlich ist die Anordnung der Türe bei der FR 2 699 219, wo gemäß den Figuren 2 und 3 Fenstertüren an bogenförmigen Führungsschienen verfahrbar angeordnet sind und seitlich in das Gehäuse eintauchen können.

Ausgehend von den bekannten Geräten liegt der vorliegenden Erfindung die Aufgabe zugrunde, Geräte, die zumindest zum Dampfgaren geeignet sind, hinsichtlich ihrer Funktionalität und ihrer Beschickung mit Nahrungsmitteln zu verbessern. Außerdem soll die Funktionalität und Handhabung der Geräte erleichtert werden und nicht zuletzt wird eine universelle Betriebsweise bei kompaktem Aufbau angestrebt.

Diese Aufgabe wird erfindungsgemäß dadurch gelöst, dass der Garraum von einer in Umfangsrichtung durchlaufenden zylindrischen Wandung mit vertikaler Achse umgeben ist und dass diese Garraumwandung in ihrer Gesamtheit vertikal verfahrbar ist, um den Garraum zu öffnen oder zu verschließen.

Durch das Verfahren der Garraumwandung in ihrer Gesamtheit ergibt sich der Vorteil, dass die bisher übliche Tür entfällt und ein erheblich größerer Querschnitt zur Beschickung des Garraumes freigegeben wird. Das Gerät kann dadurch wesentlich besser bedient werden, weil viel mehr Platz für die Eingabe der zu garenden Nahrungsmittel wie auch für die Entnahme der fertigen Gerichte zur Verfügung steht. Auch die Zugänglichkeit für Reinigungszwecke wird bedeutend verbessert.

In Weiterbildung der Erfindung empfiehlt es sich, dass die vertikal verfahrbare Garraumwandung an ihrem unteren und oberen Bereich in dichtende Anlage mit einem Bodenteil bzw. Deckenteil bringbar ist und dadurch einen für Überdruck geeigneten Garraum bildet. Die dichtende Anlage zwischen der Garraumwandung einerseits und dem Boden- bzw. Deckenteil andererseits erfolgt zweckmäßig in der heruntergefahrenen Position der Wandung. Das heißt, dass in geöffnetem Zustand des Gerätes die Garraumwandung im oberen Geräteteil verschwindet. Ein umgekehrter Bewegungsablauf, also ein Öffnen nach unten und Eintauchen in ein unteres Geräteieil liegt aber ebenfalls im Rahmen der Erfindung.

Für die konstruktive Realisierung der dichtenden Anlage bieten sich dem Fachmann verschiedene Möglichkeiten. Besonders günstig ist es, wenn am Boden- und Deckenteil in Umfangsrichtung laufende Dichtungen, insbesondere biegsame Dichtlippen angeordnet sind, die sich in der heruntergefahrenen Position der Garraumwandung an diese anlegen, und zwar derart anlegen, dass der im Garraum sich ausbildende Überdruck die Dichtungswirkung verstärkt.

Damit die Garraumwandung beim vertikalen Verfahren nicht unnötig lange an den Dichtungen entlangstreift, ist es zweckmäßig, dass der mit der Dichtung des Deckenteils zusammenwirkende Bereich der zylindrischen Wandung gegenüber dem vertikal folgenden Hauptbereich der Wandung radial in Richtung auf die Dichtung versetzt ist. Dadurch kommt die Garraumwandung nach einem Hubweg von wenigen Millimetern von der Dichtung frei.

Selbstverständlich liegt es im Rahmen der Erfindung, eine kinematische Umkehr für die Position der Dichtung vorzunehmen, sie also beispielsweise nicht am ortsfesten Boden- und Deckenteil, sondern stattdessen an der vertikal verfahrbaren Garraumwandung vorzusehen.

Für die Vertikalführung der zylindrischen Garraumwandung wird mit zumindest einer, vorzugsweise zumindest zwei Säulen gearbeitet, an denen die Garraumwandung verfahrbar gelagert ist. Diese Säulen sind zweckmäßig in den linken und rechten Seitenteilen, die sich zwischen Boden- und Deckenteil erstrecken, eingebaut, so dass sie optisch nicht in Erscheinung treten.

Grundsätzlich kann das vertikale Verfahren der zylindrischen Garraumwandung von Hand erfolgen. In Weiterbildung der Erfindung wird hierfür aber ein motorischer Antrieb eingesetzt, der die Garraumwandung nach Knopfdruck jeweils in die obere oder untere Endposition verfährt. Am Ende eines Garprogrammes fährt die Garraumwandung vorzugsweise automatisch in die Offenstellung.

Im Sinne einer kostengünstigen Aufnahme der bei Überdruckbetrieb sich einstellenden Druckkräfte im Garraum empfiehlt es sich, dass das Bodenteil und das Deckenteil durch mehrere über den Umfang verteilte vertikale Zuganker miteinander verbunden sind. Dadurch sind die Druckkräfte im Betrieb statisch gefangen.

Im Sinne eines kompakten Aufbaues ist es besonders günstig, im oberen Bereich des Gerätes, der zur Aufnahme der vertikal verfahrbaren Garraumwandung dient, alle wesentlichen Zubehörteile des Gerätes unterzubringen, insbesondere den Dampferzeuger, Gebläsemotor, Ventilblock und das Wasser-Reservoir.

Eine andere zweckmäßige Weiterbildung der Erfindung besteht darin, dass zusätzlich zu der verfahrbaren Garraumwandung, insbesondere konzentrisch dazu, zumindest im vorderen, dem Benutzer zugeordneten Bereich noch eine Türe, insbesondere eine Glastüre, angeordnet ist, die mit anschließenden Wandteilen eine Kammer zum drucklosen Dampfgaren, Kochen, Backen oder Grillen bildet. Auf diese Weise ist das Gerät universell für alle in Betracht kommenden Erhitzungsprozesse für Nahrungsmittel geeignet.

Auch bei dieser Türe empfiehlt es sich, dass sie nicht in herkömmlicher Weise nach außen schwenkt, sondern vertikal verfahrbar gelagert ist, und zwar entweder zusammen mit den anschließenden Wandteilen oder für sich allein. Auch hier verschwindet also die Glastüre im geöffneten Zustand voll im oberen Gerätebereich und bietet optimale Beschickungsmöglichkeiten.

Für die vertikale Verfahrbarkeit der Glastüre arbeitet man zweckmäßig wieder mit zumindest einer, vorzugsweise zumindest zwei Säulen, an denen die Glastüre gegebenenfalls mitsamt den in Umfangsrichtung anschließenden Wandteilen vertikal verfahrbar gelagert ist.

Grundsätzlich spielt es keine Rolle, ob die Glastüre mit ihren anschließenden Wandteilen innerhalb oder außerhalb der für den Überdruckbetrieb dienenden, vertikal verfahrbaren Garraumwandung angeordnet ist. Aus statischen und thermischen Gründen ist es aber vorzuziehen, wenn die Glastüre mit ihren Wandteilen radial außerhalb der Druckkammerwandung angeordnet wird.

Durch die Erfindung wird auch der Aufbau der Grundbestandteile des Gerätes sehr vereinfacht. Prinzipiell benötigt man nur noch eine Grundplatte, zwei vertikale Seitenteile und ein sich nahezu über die halbe Gerätehöhe erstreckendes Oberteil, das zur Aufnahme der vertikal verfahrbaren Garraumwandung und der Glastüre dient und in dem die bereits genannten Zubehörteile eingebaut sind.

Weitere Merkmale und Vorteile der Erfindung ergeben sich aus der nachfolgenden Beschreibung eines Ausführungsbeispieles und aus der Zeichnung; dabei zeigt
- Figur 1: eine Frontalansicht des Gerätes in geöffnetem Zustand;
- Figur 2: die gleiche Frontalansicht bei Beschickung des Gerätes;
- Figur 3: die gleiche Ansicht mit heruntergefahrener Glastüre;
- Figur 4: die gleiche Ansicht bei nach unten gefahrenem Druckzylinder und Glastüre;
- Figur 5: einen das Gerät von vorn nach hinten schneidenden Vertikalschnitt;
- Figur 6: einen ähnlichen Vertikalschnitt wie Figur 5 jedoch von links nach rechts;
- Figur 7: einen Horizontalschnitt im oberen Bereich des Gerätes und
- Figur 8: einen Horizontalschnitt im unteren Bereich des Gerätes.

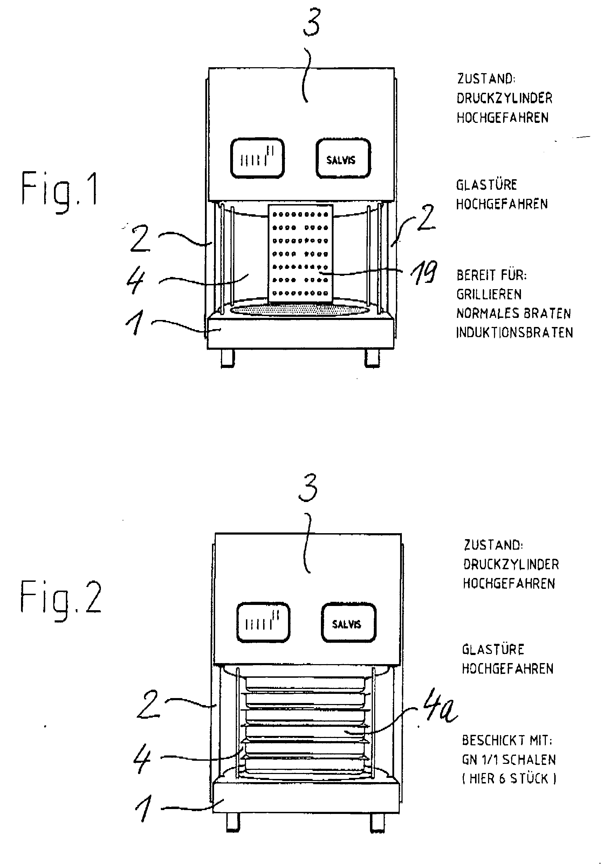

Wie die Figuren 1 bis 4 zeigen, besteht das Gerät in seiner Grundkonzeption aus einem Bodenteil 1, zumindest zwei Seitenteilen 2 und einem Oberteil 3. Zwischen Bodenteil 1 und Oberteil 3 besteht ein zumindest nach vorn zum Benutzer hin offener Zwischenraum, der den Garraum 4 bildet.

An der Rückseite des Garraumes 4 erkennt man in Figur 1 einen Gebläsekanal 19, der an ein im Oberteil 3 untergebrachtes Gebläserad angeschlossen ist und den Umluftbetrieb des Gerätes sowie die Dampfzufuhr in den Garraum 4 gestattet.

Wie Figur 2 zeigt, werden in den Garraum 4 die zu garenden Produkte eingebracht, etwa mittels Gastro-Norm-Schalen 4a. Das Bodenteil 1 hat dazu eine runde oder rechteckige Stellfläche, die zweckmäßigerweise beheizbar ist.

Das Oberteil 3 hat eine Höhe, die etwa der Höhe des Zwischenraumes zwischen Bodenteil und Oberteil entspricht. Dadurch kann das Oberteil zumindest eine vertikal verfahrbare zylindrische Wandung zum Verschließen des Garraumes 4 aufnehmen - im Ausführungsbeispiel einen Druckzylinder 7 und eine Glastüre 8, die konzentrisch zueinander angeordnet sind und wahlweise ein druckloses Garen oder ein Garen mit Überdruck gestatten.

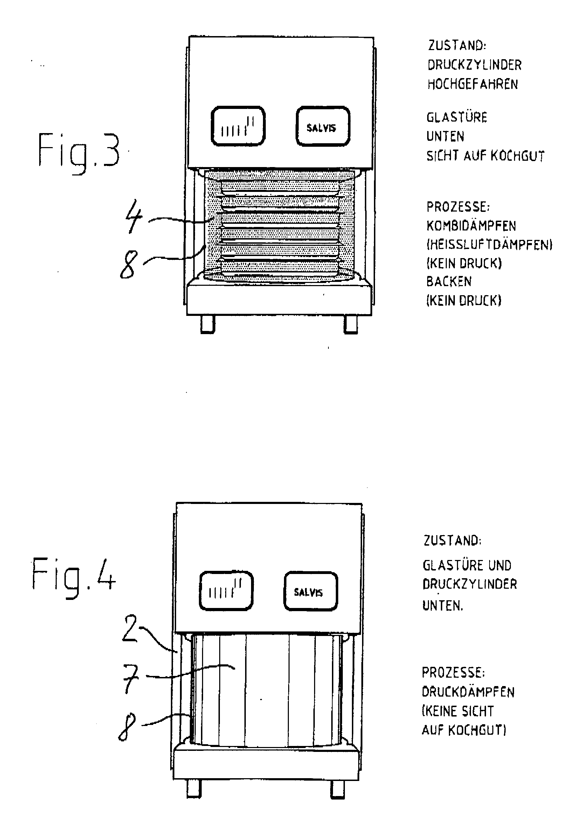

Figur 3 zeigt das Gerät, bei heruntergefahrener Glastüre 8. In dieser Stellung findet druckloses Garen statt, beispielsweise also Kombi-Dämpfen, Heißluftdämpfen, Kochen, Grillieren oder Backen.

Figur 4 zeigt das Gerät, wenn zusätzlich zur Glastüre 8 auch der Druckzylinder 7 heruntergefahren ist. In dieser Stellung findet das Dampfgaren mit Überdruck statt.

Die konstruktiven Details des Gerätes ergeben sich aus den folgenden Figuren.

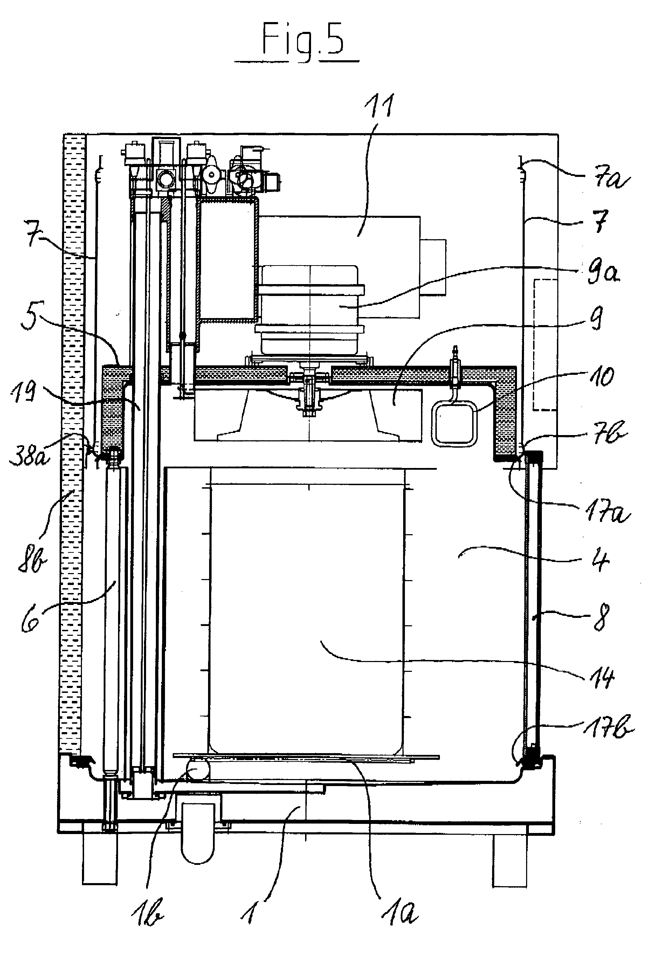

Man erkennt in Figur 5, dass oberhalb des Bodenteils 1 eine Heizplatte 1a angeordnet ist. Dabei kann es sich um eine Grill-, Griddle-, oder Induktions-Bratplatte oder dergleichen handeln. Vorzugsweise ist diese Platte 1a über eine Schwenklagerung 1 b am Bodenteil gelagert ist, so dass sie zum Reinigen hochgeklappt werden kann.

Nach oben hin wird der Garraum 4 durch eine Deckenplatte 5 begrenzt. Diese Deckenplatte ist an ihrem Rand über mehrere, über den Umfang verteilte Zuganker 6 mit dem Bodenteil 1 verbunden.

Des Weiteren erkennt man an dem von vorn nach hinten verlaufenden Schnitt in Figur 5 den Druckzylinder 7, der über 360° umläuft, in seiner oberen Position und die äußere Glastüre 8, die nur im vorderen Bereich angeordnet ist, in ihrer unteren Position. Der Druckzylinder 7 wie auch die Glastüre 8 sind in Vertikalrichtung verfahrbar in dem Gerät gelagert.

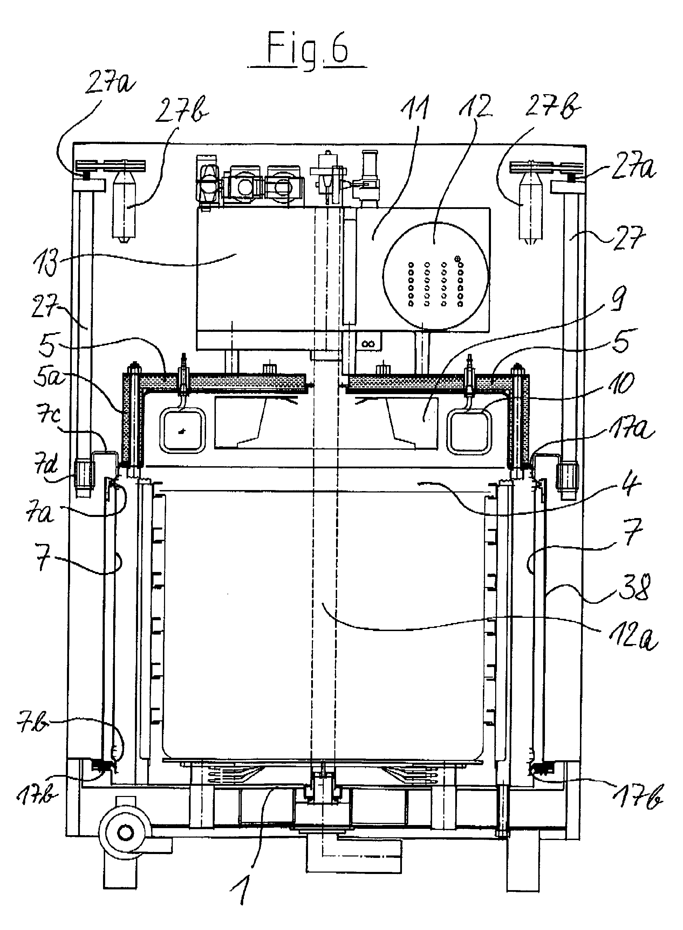

Der innere Zylindermantel 7 dient zum Abschluss des Garraumes 4, wenn mit Überdruck gearbeitet werden soll. Er besteht deshalb vorzugsweise aus Metall und wirkt an seinem oberen und unteren Rand 7a bzw. 7b - siehe Fig. 6 - mit Dichtungen 17a und 17b zusammen. Die genannten Dichtungen laufen in Umfangsrichtung und sind so angeordnet, dass sie durch den im Garraum 4 sich bildenden Überdruck gegen den Druckzylinder 7 angepresst werden. Im Ausführungsbeispiel ist der obere Rand 7a nach innen abgebogen, so dass er in heruntergefahrener Stellung des Zylinders 7 an der Oberseite der Dichtung 17a zu liegen kommt. Die Dichtung wird somit bei innerem Überdruck gegen diesen abgebogenen oberen Rand des Zylindermantels gedrückt.

Der untere Rand 7b verläuft im Wesentlichen vertikal. An seiner Außenseite liegt die Dichtung 17b an. Sie verläuft dabei mit ihrem freien Rand schräg nach innen und unten, so dass der im Garraum sich bildende Überdruck ebenfalls die Anpresswirkung der Dichtung erhöht.

Wesentlich ist, dass die Abdichtung am oberen Rand 7a auf einem reduzierten Durchmesser erfolgt, also radial nach innen versetzt gegenüber dem nach unten folgenden Zylinder. Dadurch ist sichergestellt, dass der Zylinder 7 beim Hochfahren, also beim Öffnen des Garraumes, rasch von der Dichtung freikommt und nicht an ihr entlangstreift. Befinden sich die Dichtungen nicht radial innerhalb des Druckzylinders 7, sondern radial außerhalb, so müsste die Abdichtung am oberen Rand 7a auf einem größeren Durchmesser erfolgen, also radial nach außen versetzt gegenüber der nach unten folgenden Zylinderwand.

Somit bildet der Zylinder 7 in der gezeichneten, heruntergefahrenen Position gemäß Fig. 6 zusammen mit dem Bodenteil 1 und dem Deckenteil 5 unter Einschluss der an das Deckenteil 5 anschließenden Seitenwand 5a einen druckdichten für Überdruck geeigneten zylindrischen Garraum.

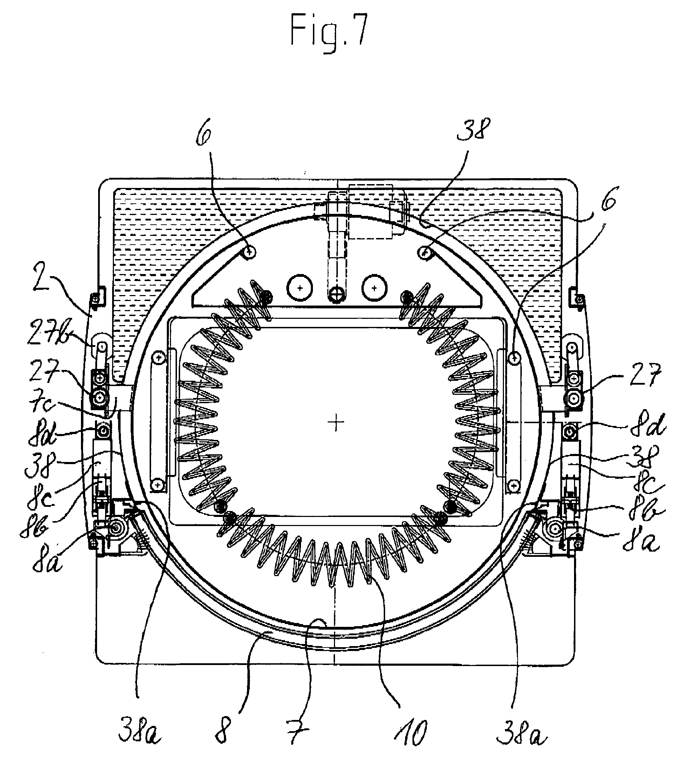

Für das vertikale Verfahren des Druckzylinders 7 ist er an mehreren, an seiner Außenseite angeordneten Säulen 27 gelagert. Man sieht diese Säulen in der linken Hälfte von Figur 6 sowie in Figur 7. Die Säulen 27 können unmittelbar die Hubbewegung des Zylinders 7 auslösen, etwa indem sie als Gewindestangen ausgebildet sind. Im Ausführungsbeispiel handelt es sich jedoch um glatte Führungsstangen und die Hubbewegung wird durch daneben angeordnete Gewindestangen 27a ausgelöst, die von einem Elektromotor 27b in der einen oder anderen Richtung angetrieben werden.

Wie die Figuren 6 und 7 außerdem zeigen, befinden sich die Säulen 27 nicht nur radial außerhalb des Druckzylinders 7, sondern auch außerhalb der Glastüre 8. Dazu ist der Zylinder 7 an seinem oberen Bereich durch Bügel 7c mit Lagerbuchsen 7d verbunden, die ihrerseits die Führungssäulen 27 umgreifen. Die Bügel 7c können die Glastüre 8 übergreifen, damit beim Herunterfahren des Druckzylinders 7 in die Betriebsposition zwangsläufig auch die Glastüre 8 nach unten mitgenommen wird. Der Benutzer wird dadurch vor einem versehentlichen Berühren des im Betrieb sehr heiß werdenden Druckzylinders 7 geschützt. Selbstverständlich lässt sich dieser Vorteil auch dann erreichen, wenn die Führungssäulen 27 zwischen Druckzylinder 7 und Glastüre 8 angeordnet sind.

Die Glastüre 8 ist etwa konzentrisch zum Druckzylinder 7 gewölbt und erstreckt sich etwa über die gleiche Höhe wie dieser. Sie braucht den Garraum 4 nicht nach außen abzudichten, denn sie wird nur dann benötigt, wenn drucklos gearbeitet wird, also vor allem beim Dampfgaren in Heißluftumgebung. Beim Kochen, Braten oder Backen könnte sie theoretisch nach oben geschoben werden; günstiger ist es aber auch bei diesen Funktionen, sie in der unteren Stellung zu belassen, um die Wärme in der Garkammer zu halten. Aus diesem Grund empfiehlt es sich, die Glastüre 8 aus Isolierglas, also mehrlagig mit Zwischenräumen herzustellen.

Wie man vor allem aus Figur 7 erkennen kann, erstreckt sich die Glastüre 8 nur über den vorderen Gerätebereich, und zwar über einen Winkel von etwa 120° bis etwa 160°. Umfangsseitig schließen sich an beide Ränder der Glastüre 8 zylindrische Wandteile 38 an. Diese Wandteile 38 verlaufen ebenfalls etwa konzentrisch zu der Wand des Druckzylinders 7 und bilden den seitlichen und rückwärtigen Abschluss des Garraumes, wenn der Druckzylinder 7 in seiner oberen Position steht. Außerdem kommen Wandteile 38 in Anlage mit dem unteren Randwulst des Druckzylinders 7, wenn dieser in der oberen Position steht. Es kommt dadurch zu einer gewissen Abdichtung des oberen Raumes, wenn drucklos gegart wird, der Druckzylinder also oben steht. Man erkennt dies in Figur 5, wo der genannte Randwulst an einer Dichtung 38a anliegt.

Am Übergang zwischen den Wandteilen 38 und der Glastüre 8 sind vertikal verlaufende Dichtungen 38a angeordnet, damit der Garraum 4 auch bei drucklosem Garen eine zur Umgebung einigermaßen abgeschlossene Kammer bildet.

Die Führung und Hubbewegung der Glastüre 8 erfolgt zweckmäßig über randständig positionierte, vertikale Führungsstangen 8a, wobei sie zur Bedienungserleichterung mit flexiblen Zugmitteln verbunden ist, die über Umlenkrollen 8b laufen und an ihrem unteren Ende jeweils ein Gegengewicht 8c tragen. Dadurch ist das Gewicht der Glastüre 8 kompensiert und sie kann mit minimalem Kraftaufwand nach oben oder unten verschoben werden. Die Gegengewichte 8c können an Vertikalführungen 8d laufen, damit sie nicht unkontrolliert hin-und herpendeln.

Die Vertikalführungen bzw. -antriebe für den Druckzylinder 7 und die Glastüre 8 sind zweckmäßig unsichtbar im linken und rechten Seitenteil 2 des Gerätes untergebracht.

Vorteilhaft ist noch, dass die Höhe des Geräteoberteiles 3 so bemessen ist, dass der Druckzylinder 7 wie auch die Glastüre 8 in ihrer hochgefahrenen Position vollständig in das Geräteoberteil hinein tauchen, also nicht nennenswert in den Garraum 4 hineinragen.

Im oberen Bereich des Garraumes erkennt man ein mit vertikaler Drehachse umlaufendes Gebläserad 9, das von einem oberhalb des Deckenteils montierten Motor 9a - vgl. Fig. 5 - angetrieben wird. Es dient vor allem für den dampflosen Umluftbetrieb in Verbindung mit radial benachbarten Heizrohren 10.

Des Weiteren befindet sich oberhalb des Deckenteils 5 ein Funktionsblock 11 mit Dampferzeuger 12, Dampfverteilrohr 12a, Ventilblock, Pumpen und einen Wasser-Reservoir 13.

Wesentlich ist noch, dass die für die Gerätefunktion wesentlichen Bestandteile, insbesondere Gebläsemotor, Wasser-Reservoir, Dampferzeuger und Ventilblock allesamt innerhalb des Zylinders 7 in der hochgefahrenen Position untergebracht sind. Dadurch ergibt sich eine äußerst kompakte Bauweise des Gerätes.

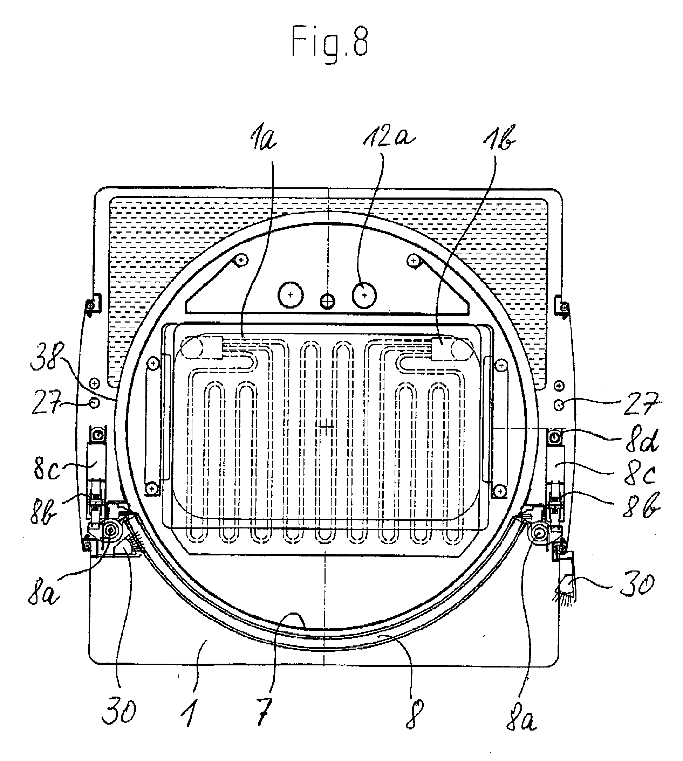

Des Weiteren erkennt man in Figur 7, dass in die linken und rechten Seitenteile 2 jeweils zumindest eine Lampe 30 eingebaut ist. Die Lampen sind so positioniert, dass sie durch den vorderen Rand der Seitenteile 2 gegenüber dem Benutzer abgeblendet sind und im wesentlichen nur in den Garraum 4 hineinstrahlen. Sie können aber auch nach außen geschwenkt werden wie in Figur 8 rechts dargestellt.

Schließlich zeigt Figur 8 eine Draufsicht auf die untere Heizplatte 1a mit den integrierten Heizstäben. Außerdem erkennt man die Anordnung der Führungssäulen 8a im Bereich der beiden gegenüberliegenden Seitenwände 2.

Zusammenfassend zeichnet sich die vorliegende Erfindung durch hervorragende Zugänglichkeit des Garraumes, kompakte Bauweise und universelle Verwendung für alle Gar-Methoden bei Normaldruck oder Überdruck aus.

## Patentansprüche

1. Gerät zum Dampfgaren von Nahrungsmitteln in einem etwa zylindrischen Garraum (4), der zwecks Eingabe und Entnahme des Nahrungsmittels zu öffnen und zu verschließen ist,
**dadurch gekennzeichnet,**
**dass** der Garraum (4) von einer zylindrischen Wandung (7) mit vertikaler Achse umgeben ist und dass die Garraumwandung (7) in ihrer Gesamtheit vertikal verfahrbar ist, um den Garraum (4) zu öffnen oder zu schließen.

2. Gerät nach Anspruch 1,
**dadurch gekennzeichnet;**
**dass** die verfahrbare Garraumwandung (7) an ihrem unteren und oberen Bereich (7a, 7b) in dichtende Anlage mit einem Bodenteil (1) beziehungsweise Deckenteil (5, 5a) bringbar ist und **dadurch** einen für Überdruck-Garen geeigneten Garraum (4) bildet.

3. Gerät nach Anspruch 2,
**dadurch gekennzeichnet,**
**dass** die dichtende Anlage zwischen der Garraumwandung (7) einerseits und Boden- beziehungsweise Deckelteil (1, 5, 5a) andererseits in der heruntergefahrenen Position der Garraumwandung (7) erfolgt.

4. Gerät nach Anspruch 2,
**dadurch gekennzeichnet,**
**dass** am Boden- und Deckenteil (1, 5, 5a) und/oder an der Garraumwandung (7) in Umfangsrichtung laufende Dichtungen, insbesondere biegsame Dichtlippen (17a, 17b) angeordnet sind.

5. Gerät nach Anspruch 4,
**dadurch gekennzeichnet,**
**dass** der mit der Dichtung (17a) des Deckenteils (5, 5a) zusammenwirkende Bereich (7a) der Kammerwandung gegenüber dem vertikal folgenden Hauptbereich der Garraumwandung (7) radial in Richtung auf die Dichtung (17a) versetzt ist.

6. Gerät nach Anspruch 1,
**dadurch gekennzeichnet,**
**dass** die Garraumwandung (7) an zumindest einer Führung (27) vorzugsweise zumindest zwei Säulen (27, 27a) vertikal verfahrbar gelagert ist.

7. Gerät nach Anspruch 1,
**dadurch gekennzeichnet,**
**dass** das Verfahren der Garraumwandung (7) über einen motorischen Antrieb (27b) erfolgt.

8. Gerät nach Anspruch 2,
**dadurch gekennzeichnet,**
**dass** Bodenteil (1) und Deckenteil (5) durch vertikale Zuganker (6) miteinander verbunden sind.

9. Gerät nach Anspruch 2,
**dadurch gekennzeichnet,**
**dass** am Deckenteil (5), insbesondere oberhalb desselben, ein Funktionsblock (11) mit Dampferzeuger (12), Pumpe, Ventilblock und Wasser-Reservoir (13) angeordnet ist.

10. Gerät nach Anspruch 1,
**dadurch gekennzeichnet,**
**dass** zusätzlich zu der zylindrischen Garraumwandung (7), insbesondere etwa konzentrisch dazu, zumindest im vorderen, dem Benutzer zugewandten Bereich eine Türe (8), insbesondere Glastüre, angeordnet ist, die mit in Umfangsrichtung anschließenden Wandteilen (38) eine zusätzliche umlaufende Zylinderwandung zum drucklosen Dampfgaren, Kochen, Braten, Grillen oder Backen bildet.

11. Gerät nach Anspruch 10,
**dadurch gekennzeichnet,**
**dass** die Türe (8) ebenfalls vertikal verfahrbar gelagert ist.

12. Gerät nach Anspruch 10,
**dadurch gekennzeichnet,**
**dass** die Türe (8) an zumindest einer Führung (8a), vorzugsweise an zumindest zwei Säulen (8a), vertikal verfahrbar gelagert ist.

13. Gerät nach Anspruch 6 und gegebenenfalls Anspruch 12,
**dadurch gekennzeichnet,**
**dass** die Führung (27) und gegebenenfalls die Führung (8a) in Seitenteilen (2) des Gerätes eingebaut sind.

14. Gerät nach Anspruch 10,
**dadurch gekennzeichnet,**
**dass** die Türe (8) sich über einen vorderen, dem Benutzer zugewandten Umfangsbereich, insbesondere über einen Winkelbereich von etwa 100° bis etwa 180° erstreckt.

15. Gerät nach Anspruch 10,
**dadurch gekennzeichnet,**
**dass** die Türe (8) radial außerhalb der Garraumwandung (7) angeordnet ist.

16. Gerät nach Anspruch 10,
**dadurch gekennzeichnet,**
**dass** die Türe (8) über flexible Zugmittel und Umlenkrollen (8b) mit Gegengewichten (8c) verbunden ist.

17. Gerät nach Anspruch 1,
**dadurch gekennzeichnet,**
**dass** es ein Oberteil (3) aufweist, in welches die Garraumwandung (7) und gegebenenfalls eine Türe (8) eintaucht und dass innerhalb des von der nach oben gefahrenen Garraumwandung (7) umschlossenen Bereiches zumindest ein Gebläsemotor (9), ein Funktionsblock (11) mit Dampferzeuger (12), Wasser-Reservoir (13) und ein Ventilblock angeordnet sind.

18. Gerät nach Anspruch 17,
**dadurch gekennzeichnet,**
**dass** sich das Oberteil (3) nahezu über die halbe Gerätehöhe erstreckt.
